# EUROPEAN PATENT SPECIFICATION

(11) **EP 4 016 916 B1**
(45) Date of publication and mention of the grant of the patent: **10.07.2024**
(21) Application number: 20020627.4
(22) Date of filing: 17.12.2020
(51) Int. Cl.: H04L 9/00, H04L 9/08, H04L 9/14, H04L 9/32, H04L 9/40

(54) **METHOD AND APPARATUS FOR SHARING DATA**
VERFAHREN UND VORRICHTUNG ZUR GEMEINSAMEN NUTZUNG VON DATEN
PROCÉDÉ ET APPAREIL POUR PARTAGER DES DONNÉES

(43) Date of publication of application: 22.06.2022
(73) Proprietor: Dr.Ing. h.c. F. Porsche Aktiengesellschaft, 70435 Stuttgart (DE)
(72) Inventor:

(56) References cited:
- WO-A1-2017/090041
- US-A1- 2020 117 818
- XU HONG ET AL: "BDSS-FA: A Blockchain-Based Data Security Sharing Platform With Fine-Grained Access Control", IEEE ACCESS, IEEE, USA, vol. 8, 5 May 2020 (2020-05-05), pages 87552 - 87561, XP011789313, DOI: 10.1109/ACCESS.2020.2992649

## Description

The present invention pertains to a method of sharing data. The invention further relates to a corresponding data processing apparatus, a corresponding computer program, and medium.

### Background art

In current cloud storage services like DropBox or WeTransfer, users generally rely on the availability, security, and privacy of these centralized services as documents stored therein are not encrypted by default. This raises concerns about the trustworthiness of cloud storage providers. Moreover, there exists no service that allows appending existing data without disclosing information about previous data while allowing to verify the authenticity and time of existence of that data.

WO2019179744A1 proposes a system for conformity tracking by triggering transactions on blockchain containing the test result. Depending on the test result, the tested system can be reset or follow a feedback path.

WO2019063256A1 proposes a system for outputting a data set - e. g. readings from a sensor - after signing it using a key derived and stored on the device. It can also output such a dataset, encrypted or unencrypted, to a peer-to-peer network like InterPlanetary File System (IPFS) or a blockchain. Authenticity of the data set can be verified by executing the authenticity module on the device itself and verifying the signature on the data set.

US20190303541A1 discusses audit smart contracts for software assets based on a trust record published in a blockchain such as Ethereum. IPFS and similar protocols can be used to externally store trust records whose hash digests reside in the blockchain. It also discusses the use of asymmetric encryption by the certificate authority which serves as a proxy between sender and receiver.

US20190018888A1 proposes a method of payment and transaction processing on multi-blockchain networks wherein frequent transactions and big data are offloaded to a decentralized storage platform such as IPFS or Swarm.

US 2020/117818 A1 discloses a method of sharing data with a recipient, the method comprising generating a random key, encrypting the data with the random key, resulting in a first ciphertext, storing the first ciphertext as per a decentralized file-sharing protocol, encrypting the random key with a public key of the recipient, resulting in a second ciphertext, and adding a reference to the first ciphertext to a smart contract offered by a blockchain.

Storing of encrypted data in an IPFS, encrypting the encryption key using an asymmetric key of the user, and storing the encrypted key in a smart contract is disclosed in XU, Hong, et al. BDSS-FA: a blockchain-based data security sharing platform with fine-grained access control. IEEE Access, 2020, vol. 8, pp. 87552-87561.

WO 2017/090041 A1 discloses a smart contract executed by an Ethereum Virtual Machine.

### Disclosure of the invention

The invention provides a method of sharing data, a corresponding data processing apparatus, corresponding computer program, and corresponding medium as per the independent claims.

The smart contract structure upon which the invention is based facilitates data transfer between two entities without direct interaction, hence preserving privacy of business interactions on a public blockchain platform. As an optional enhancement, Merkle trees may be integrated for data provenance and authenticity.

### Brief description of drawings

Figure 1 shows an encryption and storage architecture.
Figure 2 shows an Ethereum smart contracts structure.
Figure 3 shows a Merkle tree resulting from subsequent updates by business partners A, B, C, and D.

### Embodiment of the invention

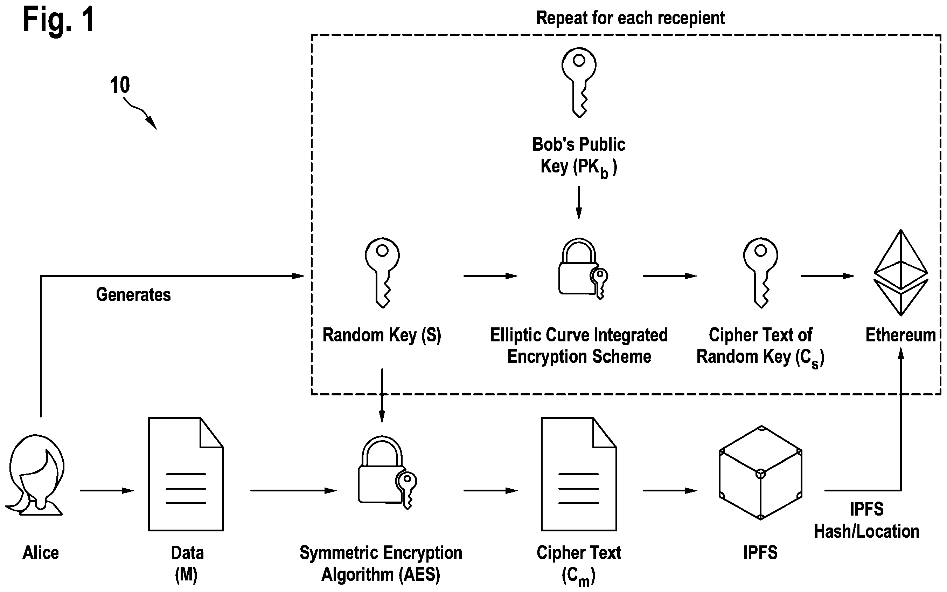

An embodiment of the invention is shown in Fig. 1. All depicted steps may be performed locally on a sender's device. Herein, the sender preferably uses a public or private gateway to interact with decentralized services such as Ethereum and IPFS.

In a common use case, Alice wants to share some data M, e.g. in form of plaintext, with Bob without having to resort to any centralized service. To this end, Alice generates a random secret key S and - by means of a symmetric encryption scheme - encrypts M using S, resulting in a first ciphertext Cₘ. This first ciphertext Cₘ is then stored in IPFS using an arbitrary gateway, and the location of Cₘ is returned as a content-addressable hash used by IPFS.

As the skilled person will appreciate, the symmetric encryption scheme used by Alice should be known to Bob. In the present architecture, AES is employed.

In the present embodiment, Alice and Bob can use different gateways to IPFS. For instance, they may use public gateways such as Infura or Cloudflare or maintain an IPFS instance on premises.

The random key S is then encrypted as per the Elliptic Curve Integrated Encryption Scheme (ECIES) using the public key PK_{b} derived from Bob's Ethereum address, which is assumed to be known to Alice. Encryption of the random key S results in a second ciphertext Cₛ. In a final step, Cₛ and the hash returned by IPFS are stored as per an Ethereum smart contract.

Once the data is written to IPFS, it can be shared with an arbitrary number of recipients by re-encrypting S with the respective recipient's public key using ECIES. Alice may also choose to encrypt the random key S using her own public key and destroy the original. This would still allow her to both access her own data and grant access to other recipients as desired.

To receive the data, Bob would register a smart contract event indicating that someone has shared data with him through Ethereum. The associated event would contain Cₛ and the IPFS hash. Bob, using his private key, could then decrypt Cₛ, derive S, and retrieve Cₘ through his IPFS gateway using the hash. Based upon S and Cₘ, he would finally obtain data M by means of the agreed-upon symmetric cryptosystem, the so-called Advanced Encryption Standard (AES).

As may be gathered from the above, the information that is stored in Ethereum smart contracts comprises the second ciphertext Cₛ and address of the first ciphertext (Cₘ) within IPFS.

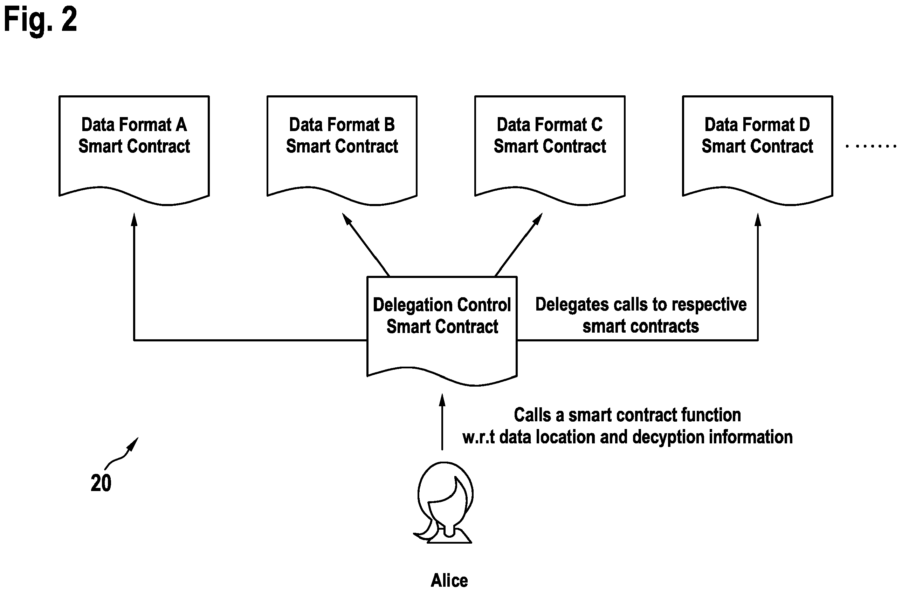

Fig. 2 shows the structure and interrelation of smart contracts (20) in Ethereum.

Following up on the example elucidated above, Alice would send Cₛ and the IPFS address to Ethereum's delegation control framework, referencing the smart contract which would then broadcast the information in the form of an event. For this purpose, Alice may choose any smart contract to whose events Bob has subscribed. By way of inheritance under delegation control, such smart contract could be duplicated at will.

It should be noted that for a particular contract, privacy would generally improve as more users interact through that contract. Advantageously, no direct interaction between the Ethereum addresses of Alice and Bob is required. Hence, any exchange between the two would leave no trail on the blockchain.

To mitigate the risk of timing-based attacks where Alice and Bob write to the smart contract in a routine manner, the timing of write operations to the smart contract is varied randomly.

The use of a plurality of smart contracts as outlined would allow Bob to process events faster than when using only a single smart contract. Furthermore, he may choose to subscribe to events from multiple smart contracts. Herein, smart contracts may be organized by data format of the ciphertext, group of interacting users, or any other classification criterion.

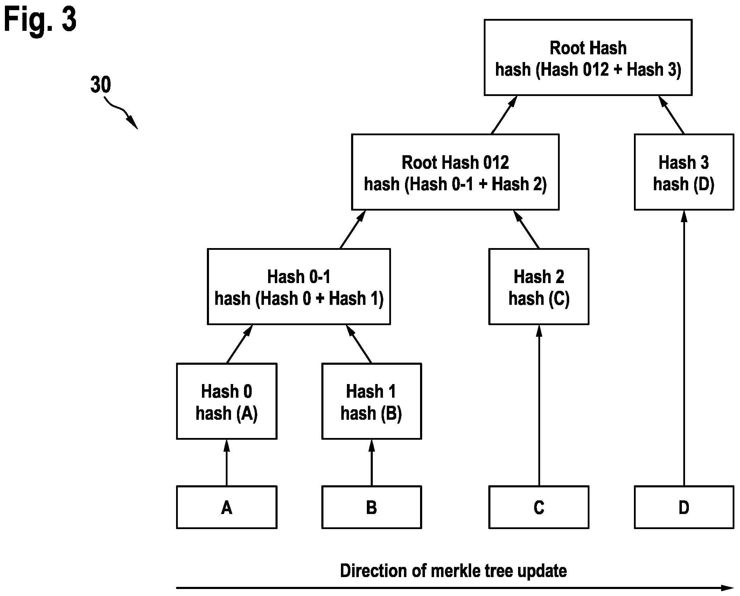

Referring to the scenario (30) of Fig. 3, let it be assumed that A, B, C, and D are business partners linked through a workflow encompassing multiple processes such as logistics, procurement, or mailing. Herein A, to initiate the workflow, would create data, generate Hash 0 using a one-way hash function such as SHA-256, and publish this hash by way of delegation control. A would further add the hash to the encrypted data.

In this scenario, when B has subscribed to events associated with the pertinent smart contract, he would decrypt the data as explained with respect to Fig. 1, thus obtaining Hash 0, which B could then use to verify the decrypted data's consistency with a timestamp associated with the smart contract event. B could then create his own data, generate Hash 1 and, using Hash 0, generate the Merkle root Hash 0-1. B would then publish root Hash 0-1 by means of delegation control, further adding Hash 0 and Hash 1 to the encrypted data.

This process could be reiterated for all business partners, each partner publishing the Merkle root of "his" sub-tree. Prior to publishing, the smart contract would verify if the Merkle root submitted for the tree at hand is valid, otherwise rejecting the publication. In such embodiment, only those entities who have the knowledge of Merkle proof, observing the correct order of hashes, would be allowed to update the tree.

The outlined approach bears the advantage that D could verify whether data transferred from A to B or B to C existed at a given time and whether C has correctly used those data without knowing their actual content. In case of a dispute, D may claim that the data he generated was based on the data provided by C. To investigate such claim, each partner could be prompted to reveal only to the investigating entity the original data, allowing to identify the culprit of misinformation.

To avoid exposure by means of an Ethereum address that doubles for applications other than data sharing, a user may choose to employ different Ethereum addresses for different purposes. In this case, to improve user experience, an advanced embodiment may accommodate universal logins. It would thus be possible to implement a service that executes diverse transactions on behalf of a single user. To this end, the user would only need to maintain a digital wallet to sign and authenticate transactions.

## Claims

1. Method (10) of sharing data (M) with a recipient, comprising
- generating a random key (S),
- encrypting the data (M) with the random key (S) using a symmetric encryption scheme, resulting in a first ciphertext (Cₘ),
wherein the symmetric encryption scheme is the Advanced Encryption Standard,
- storing the first ciphertext (Cₘ) in content-addressable storage as per a decentralized file-sharing protocol, the protocol being an InterPlanetary File System,
- encrypting the random key (S) with a public key (PK_{b}) of the recipient using an integrated encryption scheme, resulting in a second ciphertext (Cₛ), **characterized in that** the method further comprises
- storing the second ciphertext (Cₛ) and an address of the first ciphertext (Cₘ) as per a smart contract with the recipient, the smart contract being executed by an Ethereum Virtual Machine,
- the storing of the first ciphertext (Cₘ) and second ciphertext (Cₛ) is effected via a gateway,
- the integrated encryption scheme is an Elliptic Curve Integrated Encryption Scheme, and
- timing of write operations to the smart contract is varied randomly.

2. Data processing apparatus having means for carrying out the method (10) as per claim 1.

3. Computer program comprising instructions which, when the program is executed by a data processing apparatus, cause the data processing apparatus to perform the method (10) as per claim 1.

4. Computer-readable medium having stored thereon the program as per claim 2.

## Patentansprüche

1. Verfahren (10) zum Teilen von Daten (M) mit einem Empfänger, umfassend:
- Erzeugen eines Zufallsschlüssels (S),
- Verschlüsseln der Daten (M) mit dem Zufallsschlüssel (S) unter Verwendung eines symmetrischen Verschlüsselungsschemas, was zu einem ersten Chiffretext (Cₘ) führt,
wobei das symmetrische Verschlüsselungsschema der Advanced Encryption Standard ist,
- Speichern des ersten Chiffretextes (Cₘ) in einem inhaltsadressierbaren Speicher gemäß einem dezentralisierten Dateifreigabeprotokoll, wobei das Protokoll ein interplanetares Dateisystem ist,
- Verschlüsseln des Zufallsschlüssels (S) mit einem öffentlichen Schlüssel (PK_{b}) des Empfängers unter Verwendung eines integrierten Verschlüsselungsschemas, was zu einem zweiten Chiffretext (Cₛ) führt,
**dadurch gekennzeichnet, dass** das Verfahren ferner umfasst:
- Speichern des zweiten Chiffretextes (Cₛ) und einer Adresse des ersten Chiffretextes (Cₘ) gemäß einem intelligenten Vertrag mit dem Empfänger, wobei der intelligente Vertrag von einer virtuellen Ethereum-Maschine ausgeführt wird,
- das Speichern des ersten Chiffretextes (Cₘ) und des zweiten Chiffretextes (Cₛ) erfolgt über ein Gateway,
- das integrierte Verschlüsselungsschema ist ein integriertes Verschlüsselungsschema mit elliptischer Kurve, und
- - das Timing von Schreibvorgängen in den intelligenten Vertrag wird zufällig variiert.

2. Datenverarbeitungsvorrichtung, die Mittel zum Durchführen des Verfahrens (10) nach Anspruch 1 aufweist.

3. Computerprogramm, umfassend Anweisungen, die, bei Ausführung des Programms durch eine Datenverarbeitungsvorrichtung, die Datenverarbeitungsvorrichtung veranlassen, das Verfahren (10) nach Anspruch 1 durchzuführen.

4. Computerlesbares Medium, auf dem das Programm nach Anspruch 2 gespeichert ist.

## Revendications

1. Procédé (10) de partage de données (M) avec un destinataire, comprenant
- la génération d'une clé aléatoire (S),
- le chiffrement des données (M) avec la clé aléatoire (S) en utilisant un schéma de chiffrement symétrique, résultant en un premier cryptogramme (Cₘ),
dans lequel le schéma de chiffrement symétrique est la norme de chiffrement avancé (Advanced Encryption Standard),
- le stockage du premier cryptogramme (Cₘ) dans un stockage adressable par le contenu selon un protocole de partage de fichier décentralisé, le protocole étant un système de fichiers interplanétaires,
- le chiffrement de la clé aléatoire (S) avec une clé publique (PK_{b}) du destinataire à l'aide d'un schéma de chiffrement intégré, résultant en un deuxième cryptogramme (Cₛ),
**caractérisé en ce que** le procédé comprend en outre
- le stockage du deuxième cryptogramme (Cₛ) et d'une adresse du premier cryptogramme (Cₘ) conformément à un contrat intelligent avec le destinataire, le contrat intelligent étant exécuté par une machine virtuelle Ethereum,
- le stockage du premier cryptogramme (Cₘ) et du deuxième cryptogramme (Cₛ) est, effectué via une passerelle,
- le schéma de chiffrement intégré est un schéma de chiffrement intégré à courbe elliptique, et
- - la synchronisation des opérations d'écriture sur le contrat intelligent est modifiée de manière aléatoire.

2. Appareil de traitement de données ayant des moyens pour effectuer le procédé (10) selon la revendication 1.

3. Programme d'ordinateur comprenant des instructions qui, lorsque le programme est exécuté par un appareil de traitement de données, amènent l'appareil de traitement de données à réaliser le procédé (10) selon la revendication 1.

4. Support lisible par ordinateur sur lequel est stocké le programme selon la revendication 2.
